# EUROPEAN PATENT APPLICATION

(11) **EP 4 582 391 A1**
(43) Date of publication of application: **09.07.2025**
(21) Application number: 24220997.1
(22) Date of filing: 18.12.2024
(51) Int. Cl.: C02F 1/00, C02F 3/12, C02F 3/20, C02F 3/22

(54) **SEWAGE TREATMENT SYSTEM BASED ON AEROBIC GRANULAR SLUDGE**

(30) Priority: 03.01.2024 CN 202410006864
(71) Applicant: Beijing Enterprises Environmental Protection Equipment Guangdong Co., Ltd., Guangzhou, Guangdong 511300 (CN)
(72) Inventor: YANG, Chongyang, Guangzhou, Guangdong, 511300 (CN); CHEN, Jiaqi, Guangzhou, Guangdong, 511300 (CN); DENG, Genming, Guangzhou, Guangdong, 511300 (CN); NI, Kangxiang, Guangzhou, Guangdong, 511300 (CN); WANG, Zhishuai, Guangzhou, Guangdong, 511300 (CN); HE, Xiongjian, Guangzhou, Guangdong, 511300 (CN); LIANG, Huizheng, Guangzhou, Guangdong, 511300 (CN); WEN, Youqing, Guangzhou, Guangdong, 511300 (CN)
(74) Representative: Lohmanns Lohmanns & Partner mbB

(57) **Abstract**

A sewage treatment system based on aerobic granular sludge is disclosed, which includes a sewage treatment tank (1), a water distribution and aeration integrated mechanism and a water distribution and aeration switching control mechanism. The sewage treatment tank (1) includes a tank body (11), a top cover (13) is fixedly connected to a top opening of the tank body (11), and a clear water overflow port is arranged at a top side of the tank body (11). The water distribution and aeration integrated mechanism includes a first slip ring (21), a limit water retaining sleeve (220) is fixedly connected to an inner bottom of the tank body (11) through a water retaining sleeve mounting assembly, and a mixing section (212) of a water distributor body is vertically and slidably connected in the limit water retaining sleeve (220).

## Description

### TECHNICAL FIELD

The present disclosure relates to the technical field of sewage treatment equipment, in particular to a sewage treatment system based on aerobic granular sludge.

### BACKGROUND

Aerobic granular sludge is granular sludge formed by spontaneous coagulation of microorganisms under aerobic conditions, which is used to achieve efficient removal of pollutants in sewage. Compared with traditional flocculent activated sludge, aerobic granular sludge has larger sludge particle size, faster settling speed and more compact layered structure, which makes it feasible for aerobic granular sludge process to remove carbon, nitrogen and phosphorus simultaneously in a single tank.

In the existing technology, in the sewage treatment system using aerobic granular sludge to treat sewage, since the sewage treatment system does not have a proper water distribution device, the sewage flow directly enters a sewage treatment tank upward, which causes a sludge filter layer formed by sedimentation of aerobic granular sludge to be washed away, and clear water above the sludge filter layer mixes with the sewage entering the sewage treatment tank, which affects the sewage treatment effect. Moreover, the existing sewage treatment system with aerobic granular sludge has poor aeration performance, and the oxygen content in the sewage increases slowly, which affects the sewage treatment efficiency.

### SUMMARY

The technical problem to be solved by the present disclosure is to overcome the existing defects and provide a sewage treatment system based on aerobic granular sludge. The sewage is sent to a bottom of a tank body by using a water distributor body and a reflector, and an expansion hydraulic bulge is formed at the bottom of the tank body to support the suspension of a sludge filter layer, so that clear water above the sludge filter layer is discharged from a clear water overflow port, preventing the water flow from breaking through the sludge filter layer and affecting the sewage treatment effect. The water distribution and aeration switching control mechanism drives the water distributor body to move downwards, so that the water distributor body is communicated with the reflector through an airflow communication mechanism, the airflow entering the water distributor body enters an inner side of the reflector, and then overflows from a bottom edge of the reflector to mix with the sewage in the tank body, thereby realizing primary aeration, improving the aeration effect by cooperating with secondary aeration mechanism, rapidly increasing the oxygen content in the sewage, being beneficial to accelerating the sewage treatment efficiency, and effectively solving the problems in the existing technology.

In order to achieve the above objectives, the present disclosure discloses the following technical schemes. A sewage treatment system based on aerobic granular sludge is disclosed, which includes:
- a sewage treatment tank, including a tank body, a top cover screw and a top cover, where the top cover is fixedly connected to a top opening of the tank body through the top cover screw, a clear water overflow port is arranged at a top side of the tank body;
- a water distribution and aeration integrated mechanism, including a first slip ring, a first vertical pipe, a reflector, a water inlet section of a water distributor body, a plurality of sewage reflux holes, a mixing section of the water distributor body, a diffusion section of the water distributor body, an agglomerated granular sludge supporting assembly, a plurality of limit water retaining sleeves and a water retaining sleeve mounting assembly, where four limit water retaining sleeves are arranged in an annular array within the tank body, each limit water retaining sleeve is fixedly connected to an inner bottom of the tank body through the water retaining sleeve mounting assembly, the mixing section of the water distributor body is vertically and slidably connected in each limit water retaining sleeve, a top of the mixing section of the water distributor body is integrally connected to the water inlet section of the water distributor body, three sewage reflux holes are arranged in an annular array on a side surface of the inlet section of the water distributor body, a bottom of the mixing section of the water distributor body is integrally connected to the diffusion section of the water distributor body, a top of the water inlet section of the water distributor body is threadedly connected to a threaded cover, a middle of the threaded cover is fixedly connected to a nozzle, a top of the nozzle is fixedly connected to a bottom end of the first vertical pipe through a pipe joint, the first slip ring is fixedly connected to a top of the top cover at a position corresponding to the first vertical pipe, the first slip ring is vertically and slidably connected to the corresponding first vertical pipe, the reflector is arranged below the diffusion section of the water distributor body, a peripheral side of a bottom of the reflector is connected to the supporting frames in the water retaining sleeve mounting assembly through the agglomerated granular sludge supporting assembly, where the water inlet section of the water distributor body, the sewage reflux holes, the mixing section and the diffusion section of the water distributor body constitute the water distributor body; and
- a water distribution and aeration switching control mechanism, installed at the top of the top cover and connected to the top of a first vertical pipe.

Sewage enters from the top of the first vertical pipe, then enters the nozzle through the pipe j oint. A bottom of the nozzle is a conical opening, and the nozzle spray the sewage into the water inlet section of the water distributor body, then the sewage sequentially passes through the mixing section and the diffusion section of the water distributor body, and then flows to the reflector through the diffusion section of the water distributor body. Then the reflector reflects the sewage flow upward so that the sewage flow mixes with the sludge filter layer generated by aerobic granular sludge in the tank body and the water in the tank body. The mixed sewage re-enters the water inlet section, the mixing section and the diffusion section of the water distributor body through the sewage reflux holes, so as to realize the water distribution and fully mix the newly entered sewage with the sludge filter layer and water in the tank body. Then the mixed sewage is allowed to stand for the anoxic process. After the completion of the anoxic process, the water distribution and aeration switching control mechanism drives the first vertical pipe to move downwards relative to the first slip ring and the top cover, and drives the water distributor body to move downwards relative to the limit water retaining sleeve through the threaded cover and the nozzle. The limit water retaining sleeve blocks the sewage reflux holes, and the bottom of the water distributor body abuts against the reflector, so that the water distributor body and the reflector can be used as a primary aeration device to carry out aerobic aeration treatment in cooperation with an air supply device, and then sedimentation is waited. The aerobic granular sludge in the tank body sedimentates on the agglomerated granular sludge supporting assembly to form a sludge filter layer with a proper thickness, then the sewage containing flocculent granular sludge on an upper layer of the sludge filter layer is discharged into a filter press for filter pressing treatment, and then the water distribution and aeration switching control mechanism drives the first vertical pipe to move upwards relative to the first slip ring and the top cover, so that the water distributor body is reset. Sewage is distributed into the tank body again through the water distributor body. The sewage flows to the reflector through the water distributor body to form the expansion hydraulic bulge, which lifts the sludge filter layer on the agglomerated granular sludge supporting assembly, then clear water above the sludge filter layer overflows from the clear water overflow port, thus completing the basic work flow of the sewage treatment system.

Further, the water distribution and aeration integrated mechanism further includes a horizontal pipe, two one-way valves, two first hoses, a sewage pump and a first air pump. A top end of the first vertical pipe is connected to a middle part of the horizontal pipe. Two ends of the horizontal pipe are connected to respective ends of the two first hoses through the two one-way valves. Another end of one of the two first hoses is connected to a water outlet of the sewage pump, and another end of another one of the two first hoses is connected to an air outlet of the first air pump. The sewage pump and the first air pump are both mounted on the top of the top cover. When the water distribution and aeration integrated mechanism is required to be used as a water distribution equipment, the first air pump does not work, and the sewage pump works to send the external sewage into the horizontal pipe and then into the first vertical pipe through a corresponding one of the two first hoses and a corresponding one of the two one-way valves. Due to one of the two one-way valves close to the first air pump, the sewage does not enter the first air pump, and the sewage in the first vertical pipe enters the water distributor body through the nozzle. When the water distribution and aeration integrated mechanism is required to be used as an aeration equipment, the water distribution and aeration switching control mechanism drives the first vertical pipe and the water distributor body to move down, an inner bottom of the water distributor body is communicated with an inner top of the reflector, the first air pump is used as an air delivery device, the first air pump works, the sewage pump does not work, and the first air pump sends the air flow into the horizontal pipe through a corresponding one of the two first hoses and a corresponding one of the two one-way valves, and then into the first vertical pipe. The airflow enters the water distributor body and the reflector, overflows from the bottom of the reflector and enters the sewage in the bottom of the tank body, thus realizing the aeration process.

Further, the reflector includes a conical reflector cover, a plurality of guide vanes and an annular guide plate. The conical reflector cover is arranged below the diffusion section of the water distributor body. A bottom edge of the conical reflector cover is integrally connected to the annular guide plate. An outer edge of the annular guide plate is bent upwards. A plurality of spiral guide vanes are arranged in an annular array at a peripheral side of the conical reflector cover. When distributing water, the water diffused from a bottom of the water distributor body flows to a top of the conical reflector cover. The spiral guide vanes are configured to guide the water, so that the water flows in a spiral shape and towards the annular guide plate. A middle part of the annular guide plate is concave downwards, and an outer side of the annular guide plate is bent upwards, so that the spiral water flows back upwards under the flow guiding action of the annular guide plate, forming an expansion hydraulic bulge. The sludge filter layer on the agglomerated granular sludge supporting assembly can be stably lifted, so that the sludge filter layer can be slowly suspended, and be prevented from being washed away by water flow. Therefore, the sewage below the sludge filter layer can be prevented from breaking through the sludge filter layer and polluting the clear water above the sludge filter layer.

Further, the agglomerated granular sludge supporting assembly includes a plurality of pull rods, a plurality of agglomerated granular sludge supporting rods and a mounting sleeve. The plurality of pull rods are arranged in an annular array at a top of the outer edge of the annular guide plate. The four supporting frames in the water retaining sleeve mounting assembly are fixedly connected to the mounting sleeve through a plurality of third bolts. An inner side of the mounting sleeve is fixedly connected to the plurality of agglomerated granular sludge supporting rods arranged in an annular array. The number of the agglomerated granular sludge supporting rods is the same with the number of the pull rods. Ends of the agglomerated granular sludge supporting rods away from the mounting sleeve are fixedly connected to corresponding top ends of the pull rods. The mounting sleeve can realize the detachable mounting of the agglomerated granular sludge supporting assembly through the third bolts. The agglomerated granular sludge supporting rods are densely distributed, so that the agglomerated granular sludge can not fall down after encountering the agglomerated granular sludge supporting rods. The pull rods can mount to the annular guide plate and the conical reflector cover, so that the conical reflector cover and the annular guide plate keep a distance from an inner bottom surface of the tank body. The pull rods also raise the agglomerated granular sludge supporting rods, so that the sewage reflected by the reflector just corresponds to a bottom of the sludge filter layer on the agglomerated granular sludge supporting assembly, and the sewage entering the bottom of the tank body can successfully support the sludge filter layer.

Further, the airflow communication mechanism is further included, which includes a mounting rod, a thimble, a mounting frame, a telescopic rod, a spring, a sealing ball and an air guide tube. An inner middle part of the mixing section of the water distributor body is fixedly connected to the vertical thimble through the mounting rod, and the air guide tube is arranged at the bottom of the conical reflector cover. A top end of the conical reflector cover is communicated with a bottom of the air guide tube. An air hole is arranged at a top of the air guide tube. An inner top of the conical reflector cover is fixedly connected to a bottom of the telescopic rod through the mounting frame. A sealing ball corresponding to the air hole is arranged at a top of the telescopic rod. The telescopic rod is sleeved with a spring, which pushes the sealing ball to block the air hole. When the water distribution and aeration switching control mechanism drives the water distributor body to move down through the first vertical pipe, the mounting rod drives the thimble to move down, and a bottom end of the thimble passes through the air hole and abuts against a top center of the sealing ball. As the water distributor body continues to move down, the thimble pushes the sealing ball to move down, the spring is compressed, and the telescopic rod is shortened, so that the sealing ball leaves the air hole. When the diffusion section of the water distributor body completely abuts against the top of the conical reflector cover, the bottom of the water distributor body is communicated with the inner top of the conical reflector cover through the air hole at the top of the air guide tube. As the water distributor body moves down, the sewage reflux hole on the side of the water inlet section of the water distributor body is blocked by the limit water retaining sleeve, the first air pump serves as an air supply device to supply air into the first hose. The air enters the first vertical pipe through the horizontal pipe, then enters an inner bottom of the conical reflector cover through the water distributor body, and overflows from the bottom of the annular guide plate. The air mixes with the sewage in the bottom of the tank body to realize the basic aeration, so that the water distributor body and the reflector become the aeration mechanism, and the multifunctional utilization of the water distributor body and the reflector is realized.

The airflow communication mechanism further includes a first sealing ring which is arranged at the bottom of the diffusion section of the water distributor body. The first sealing ring adopts a rubber ring. When the bottom of the diffusion section of the water distributor body abuts against the top of the conical reflector cover, there is a gap between the diffusion section of the water distributor body and the conical reflector cover that leaks air. The first sealing ring can seal the gap, so that all the air can enter an inner side of the conical reflector cover and be discharged from the bottom of the annular guide plate, and the air can enter the bottom of the tank body and then contact and mix with the sewage upwards, thus improving the aeration effect.

Further, the water distribution and aeration switching control mechanism includes a lifting rod, a sliding column, a top plate, a control motor, a double-screw bolt and a connecting sleeve. The top of the top cover is fixedly connected to the top plate through the vertical sliding column, and the vertical double-screw bolt is rotatably connected between the top plate and the top cover. A top of the double-screw bolt is fixedly connected to the control motor, which is fixed on the top of the top plate. One end of the lifting rod is fixedly connected to a top of the first vertical pipe through the connecting sleeve, the sliding column is vertically and slidably connected in a sliding hole on the lifting rod, and the double-screw bolt is threadedly connected in a threaded hole on the lifting rod. The control motor works to drive the double-screw bolt to rotate clockwise. The screw thread interaction between the double-screw bolt and the lifting rod drives the first vertical pipe to move downwards relative to the first slip ring through the connecting sleeve, so that the water distributor body is communicated with the reflector through an airflow communication mechanism, the sewage pump stops working and the first air pump works, thereby switching to the aeration mechanism. The control motor works to drive the double-screw bolt to rotate counterclockwise. The screw thread interaction between the double-screw bolt and the lifting rod drives the first vertical pipe to move upwards relative to the first slip ring through the connecting sleeve, so that the bottom of the water distributor body is separated from the top of the reflector, the sewage pump works and the first air pump stops working, thereby switching to the water distribution mechanism.

Further, a sludge discharging mechanism is further included, which includes a sludge discharging pipeline, a sludge discharging valve and a uniformly distributed collecting pipeline. The sludge discharging pipeline is inserted and connected in a middle of a side surface of the tank body. The sludge discharging valve is mounted at an end of the sludge discharging pipeline outside the tank body. The sludge discharging pipeline is connected to the uniformly distributed collecting pipeline at an end inside the tank body.

Further, the uniformly distributed collecting pipeline includes an arc-shaped collecting pipe, a plurality of sludge discharging horizontal pipes and a pipeline bracket. The end of the sludge discharging pipeline inside the tank body is fixedly connected to a middle part of the arc-shaped collecting pipe. A side surface of the arc-shaped collecting pipe is connected to an end of each of the plurality of sludge discharging horizontal pipes. There may be four sludge discharging horizontal pipes with equal distance. Both sides of each of the sludge discharging horizontal pipes respectively includes a plurality of sludge discharging holes, the specific number of which may be set according to actual requirements. The pipeline bracket is fixedly connected to bottoms of the sludge discharging horizontal pipes, and an end of the pipeline bracket is fixedly connected to a middle inner wall of the tank body.

Further, a secondary aeration mechanism is included, which includes a plurality of aeration heads. An annular air pipe is arranged at a lower side of the tank body corresponding to the conical reflector cover. A side of the annular air pipe is connected to an air supply assembly. A plurality of risers are arranged in an annular array at a top of the annular air pipe. A top of each riser penetrates through a bottom of the tank body and is connected to a middle part of a lower side of a rotary pipe through a rotary joint. The rotary pipe is located below corresponding agglomerated granular sludge supporting rods. Both ends of the rotary pipe are closed. One of the aeration heads is arranged at a front side of an end of the rotary pipe, and another one of the aeration heads is arranged at a rear side of another end of the rotary pipe. The air supply assembly supplies air into the annular air pipe, and the air in the annular air pipe enters each riser. Then the air in the riser is sent into the rotary pipe through the rotary joint, and sent to the bottom of the tank body through the aeration heads, so that aeration is realized, and aeration efficiency can be improved by the aeration equipment. Since the aeration heads at both ends of the rotary pipe are in opposite directions, and a bottom of the rotary pipe is connected to the rotary joint, the rotary joint, as a mechanism that can still convey the medium when rotating, can make the rotary pipe rotate, so that the air discharged from the aeration heads can fully contact the sewage at the bottom of the tank body, further improving the aeration effect and rapidly increasing the oxygen content of the sewage.

Further, a stirring mechanism is included, which includes a stirring power assembly, a stirring shaft, an adjusting sleeve, an adjusting screw, a plurality of connecting rods, a plurality of stirring paddles and a plurality of stirring blades. A middle part of the top cover is rotatably connected to a top of the stirring shaft through a stirring bearing. A top end of the stirring shaft is connected to the stirring power assembly, and a middle part of the stirring shaft is movably sleeved with the adjusting sleeve. A screw hole on a side of the adjusting sleeve is internally threaded with an adjusting screw, and the adjusting screw abuts against a side of the stirring shaft. The plurality of connecting rods are arranged in an annular array on a peripheral side of the adjusting sleeve, and each connecting rod is fixedly connected to a respective one of the stirring paddles. A bottom of the stirring shaft extends to the inner bottom of the tank body. The plurality of stirring blades are arranged in an annular array on a peripheral side of the bottom of the stirring shaft.

The stirring motor works to drive the stirring shaft to rotate. The stirring shaft drives the stirring blades to stir the sewage in the bottom of the tank body. By loosening the adjusting screw, the height of the adjusting sleeve on the stirring shaft can be adjusted, so that the heights of the connecting rods and the stirring paddles can be changed, and the stirring paddles can stir a proper water layer of the sewage.

Compared with the existing technology, the sewage treatment system based on aerobic granular sludge has the following benefits:
- first, the sewage is sent to the bottom of the tank body by using the water distributor body and the reflector, the expansion hydraulic bulge is formed at the bottom of the tank body to support the sludge filter layer to suspend, and clear water above the sludge filter layer is discharged from the clear water overflow port, so as to prevent water from breaking through the sludge filter layer and affecting the sewage treatment effect;
- second, the water distribution and aeration switching control mechanism drives the water distributor body to move down, so that the water distributor body is communicated with the reflector through the airflow communication mechanism, and the airflow entering the water distributor body enters the inner side of the reflector, then overflows from the bottom edge of the reflector to mix with the sewage in the tank body, thus realizing primary aeration, and cooperating with the secondary aeration mechanism to improve the aeration effect, rapidly increasing the oxygen content in the sewage, which is beneficial to accelerating the sewage treatment efficiency; and
- third, with the help of aerobic granular sludge, the simultaneous nitrification and denitrification environment can be constructed, and the removal effect of total nitrogen in sewage can be improved.

### BRIEF DESCRIPTION OF DRAWINGS

FIG. 1 is a schematic structural diagram of a sewage treatment system based on aerobic granular sludge of the present disclosure;
FIG. 2 is a partially enlarged structural diagram of the sewage treatment system based on aerobic granular sludge at A in FIG. 1;
FIG. 3 is a schematic diagram of a bottom structure of the sewage treatment system based on aerobic granular sludge of the present disclosure;
FIG. 4 is a schematic structural diagram of section I of the sewage treatment system based on aerobic granular sludge of the present disclosure;
FIG. 5 is a schematic structural diagram of section II of the sewage treatment system based on aerobic granular sludge of the present disclosure;
FIG. 6 is a schematic diagram of a local structure of a water distribution and aeration integrated mechanism in the sewage treatment system based on aerobic granular sludge of the present disclosure;
FIG. 7 is a schematic structural diagram of a stirring mechanism of the sewage treatment system based on aerobic granular sludge of the present disclosure;
FIG. 8 is a schematic diagram of a local section structure of the sewage treatment system based on aerobic granular sludge of the present disclosure;
FIG. 9 is a partially enlarged structural diagram of the sewage treatment system based on aerobic granular sludge at B in FIG. 8;
FIG. 10 is a partially enlarged structural schematic diagram of the sewage treatment system based on aerobic granular sludge at C in FIG. 8.

In the figures, correspondences between reference numerals and technical features are as follows: 1 sewage treatment tank, 11 tank body, 12 top cover screw, 13 top cover, 14 overflow trough, 15 overflow notch, 2 water distribution and aeration integrated mechanism, 21 first slip ring, 22 first vertical pipe, 23 horizontal pipe, 24 one-way valve, 25 first hose, 26 sewage pump, 27 pipe joint, 28 nozzle, 29 threaded cover, 210 water inlet section of water distributor body, 211 sewage reflux hole, 212 mixing section of water distributor body, 213 diffusion section of water distributor body, 214 conical reflector cover, 215 guide vane, 216 annular guide plate, 217 pull rod, 218 agglomerated granular sludge supporting rod, 219 mounting sleeve, 220 limit water retaining sleeve, 221 first bolt, 222 spoke, 223 mounting ring, 224 second bolt, 225 dismounting ring, 226 first air pump, 227 airflow guide bar, 228 supporting frame, 3 airflow communication mechanism, 31 mounting rod, 32 thimble, 33 mounting frame, 34 telescopic rod, 35 spring, 36 sealing ball, 37 air guide tube, 38 first sealing ring, 4 water distribution and aeration switching control mechanism, 41 lifting rod, 42 sliding column, 43 top plate, 44 control motor, 45 double-screw bolt, 46 connecting sleeve, 5 downcomer, 6 secondary aeration mechanism, 61 annular air pipe, 62 riser, 63 rotary joint, 64 rotary pipe, 65 aeration head, 66 air supply pipe, 67 second air pump, 7 stirring mechanism, 71 stirring bearing, 72 stirring motor, 73 arch motor frame, 74 stirring shaft, 75 adjusting sleeve, 76 adjusting screw, 77 connecting rod, 78 stirring paddle, 79 stirring blade, 8 sludge discharging mechanism, 81 sludge discharging pipeline, 82 sludge discharging valve, 83 arc-shaped collecting pipe, 84 sludge discharging horizontal pipe, 85 pipeline bracket and 9 downcomer valve.

### DETAILED DESCRIPTION

In the following, the technical scheme in the embodiments of the present disclosure will be clearly described with reference to the accompany drawings. Obviously, the described embodiments are only a part of the embodiments of the present disclosure, but not all the embodiments. Based on the embodiments in the present disclosure, all other embodiments obtained by those skilled in the art without creative labor belong to the scope of protection of the present disclosure.

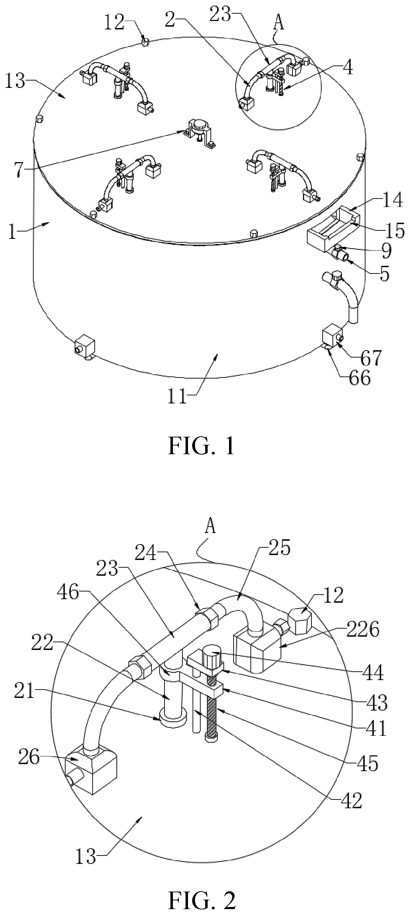

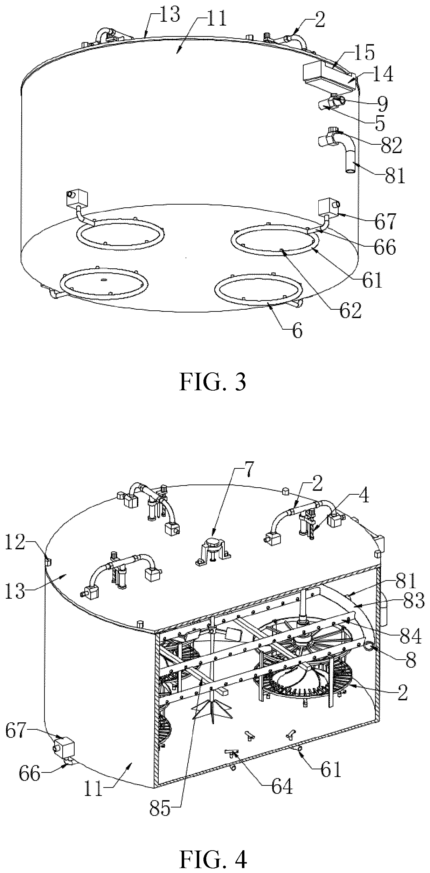

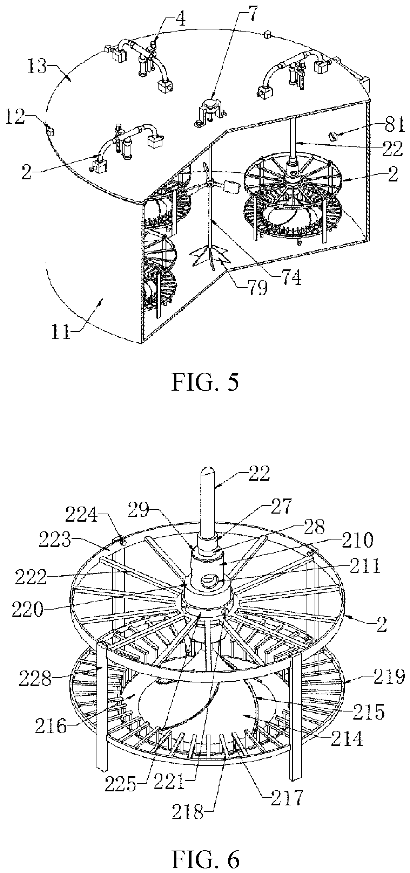

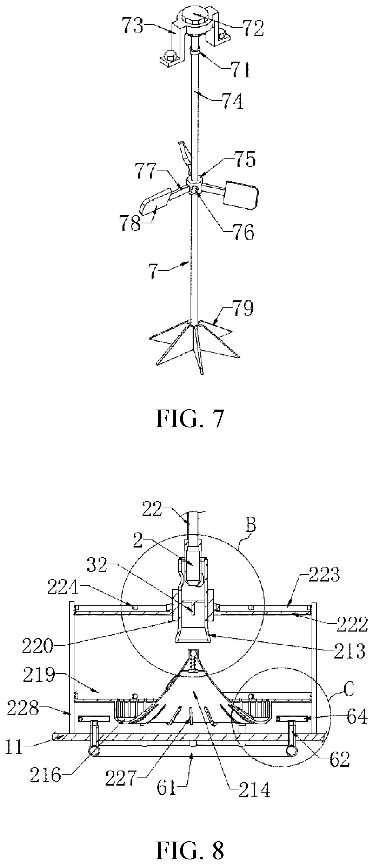

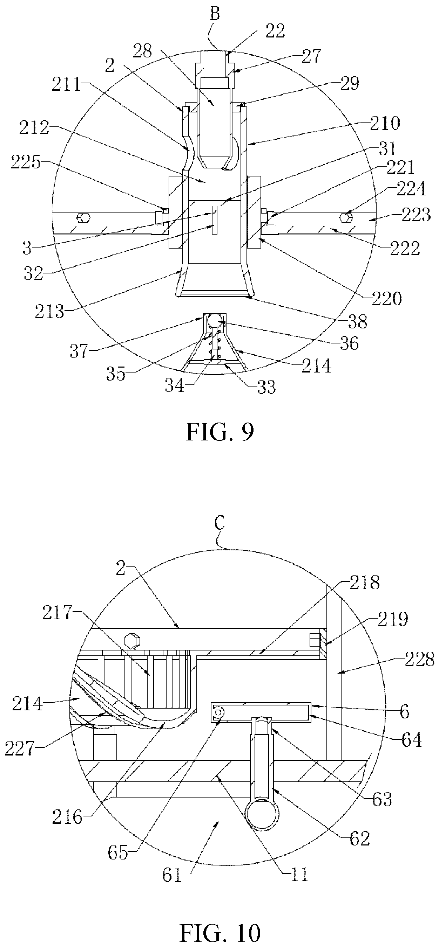

Please refer to FIGS. 1 to 10. Embodiment one of the present disclosure discloses a sewage treatment system based on aerobic granular sludge, including a sewage treatment tank 1, a water distribution and aeration integrated mechanism 2 and a water distribution and aeration switching control mechanism 4.

The sewage treatment tank 1 includes a tank body 11, a top cover screw 12 and a top cover 13. The tank body 11 is a vertical cylindrical mechanism. The top cover 13 is fixedly connected to a top opening of the tank body 11 through the top cover screw 12. A clear water overflow port is arranged at a top side of the tank body 11.

The sewage treatment tank 1 also includes an overflow trough 14 and an overflow notch 15. The overflow trough 14 is arranged at an outer side of a top of the tank body 11 corresponding to the clear water overflow port. The overflow notch 15 is arranged at a top of a side of the overflow trough 14 away from the tank body 11. The clear water overflowed from the clear water overflow port first enters the overflow trough 14, and then is discharged through the overflow notch 15.

The water distribution and aeration integrated mechanism 2 includes a first slip ring 21, a first vertical pipe 22, a reflector, a water inlet section 210 of a water distributor body, a plurality of sewage reflux holes 211, a mixing section 212 of the water distributor body, a diffusion section 213 of the water distributor body, an agglomerated granular sludge supporting assembly, a limit water retaining sleeve 220 and a water retaining sleeve mounting assembly. In some embodiments, four water distribution and aeration integrated mechanisms 2 are arranged. Four limit water retaining sleeves 220 are arranged in an annular array within the tank body 11, and each limit water retaining sleeve 220 is fixedly connected to an inner bottom of the tank body 11 through a respective water retaining sleeve mounting assembly of the four water distribution and aeration integrated mechanisms.

The water retaining sleeve mounting assembly includes a plurality of first bolts 221, a plurality of spokes 222, a mounting ring 223, a plurality of second bolts 224, a dismounting ring 225 and a plurality of supporting frames 228. A peripheral side of the limit water retaining sleeve 220 is sleeved with the dismounting ring 225. The dismounting ring 225 is fixedly connected to the limit water retaining sleeve 220 by the first bolts 221. A peripheral side of the dismounting ring 225 is fixedly connected to the mounting ring 223 by the spokes 222 distributed in an annular array. A peripheral side of the mounting ring 223 is fixedly connected to tops of four supporting frames 228 by second bolts 224. The bottoms of the supporting frames 228 are fixedly connected to an inner bottom of the tank body 11. The mounting ring 223 can be disassembled by the second bolts 224, and the limit water retaining sleeve 220 can be conveniently mounted and fixed by the first bolts 221.

The mixing section 212 of the water distributor body is vertically and slidably connected in each limit water retaining sleeve 220. A top of the mixing section 212 of the water distributor body is integrally connected to the water inlet section 210 of the water distributor body. Three sewage reflux holes 211 are arranged in an annular array on a side surface of the inlet section 210 of the water distributor body. A bottom of the mixing section 212 of the water distributor body is integrally connected to the diffusion section 213 of the water distributor body. A top of the water inlet section 210 of the water distributor body is threadedly connected to a threaded cover 29. A middle of the threaded cover 29 is fixedly connected to a nozzle 28. A top of the nozzle 28 is fixedly connected to a bottom end of the first vertical pipe 22 through a pipe joint 27. The first slip ring 21 is fixedly connected to a top of the top cover 13 at a position corresponding to the first vertical pipe 22. The first slip ring 21 is vertically and slidably connected to the corresponding first vertical pipe 22. The reflector is arranged below the diffusion section 213 of the water distributor body. A peripheral side of a bottom of the reflector is connected to the supporting frames 228 in the water retaining sleeve mounting assembly through the agglomerated granular sludge supporting assembly. The water inlet section 210 of the water distributor body, the sewage reflux holes 211, the mixing section 212 of the water distributor body and the diffusion section 213 of the water distributor body constitute the water distributor body.

The reflector includes a conical reflector cover 214, a plurality of guide vanes 215 and an annular guide plate 216. The conical reflector cover 214 is arranged below the diffusion section 213 of the water distributor body. A bottom edge of the conical reflector cover 214 is integrally connected to the annular guide plate 216. An outer edge of the annular guide plate 216 is bent upwards. A plurality of spiral guide vanes 215 are arranged in an annular array at a peripheral side of the conical reflector cover 214.

When distributing water, the water diffused from a bottom of the water distributor body flows to a top of the conical reflector cover 214. The spiral guide vanes 215 are configured to guide the water, so that the water flows in a spiral shape and towards the annular guide plate 216. A middle part of the annular guide plate 216 is concave downwards, and an outer side of the annular guide plate 216 is bent upwards, so that the spiral water flows back upwards under the flow guiding action of the annular guide plate 216, forming an expansion hydraulic bulge. The sludge filter layer on the agglomerated granular sludge supporting assembly can be stably lifted, so that the sludge filter layer can be slowly suspended, and be prevented from being washed away by water flow. Therefore, the sewage below the sludge filter layer can be prevented from breaking through the sludge filter layer and polluting the clear water above the sludge filter layer.

The agglomerated granular sludge supporting assembly includes a plurality of pull rods 217, a plurality of agglomerated granular sludge supporting rods 218 and a mounting sleeve 219. The plurality of pull rods 217 are arranged in an annular array at a top of the outer edge of the annular guide plate 216. The four supporting frames 228 in the water retaining sleeve mounting assembly are fixedly connected to the mounting sleeve 219 through a plurality of third bolts. An inner side of the mounting sleeve 219 is fixedly connected to the plurality of agglomerated granular sludge supporting rods 218 arranged in an annular array. The number of the agglomerated granular sludge supporting rods 218 is the same with the number of the pull rods 217. Ends of the agglomerated granular sludge supporting rods 218 away from the mounting sleeve 219 are fixedly connected to corresponding top ends of the pull rods 217.

The mounting sleeve 219 can realize the detachable mounting of the agglomerated granular sludge supporting assembly through the third bolts. The agglomerated granular sludge supporting rods 218 are densely distributed, so that the agglomerated granular sludge cannot fall down after encountering the agglomerated granular sludge supporting rods 218. The pull rods 217 can mount to the annular guide plate 216 and the conical reflector cover 214, so that the conical reflector cover 214 and the annular guide plate 216 keep a distance from an inner bottom surface of the tank body 11. The pull rods 217 also raise the agglomerated granular sludge supporting rods 218, so that the sewage reflected by the reflector just corresponds to a bottom of the sludge filter layer on the agglomerated granular sludge supporting assembly, and the sewage entering the bottom of the tank body 11 can successfully support the sludge filter layer.

The water distribution and aeration integrated mechanism 2 further includes a horizontal pipe 23, two one-way valves 24, two first hoses 25, a sewage pump 26 and a first air pump 226. A top end of the first vertical pipe 22 is connected to a middle part of the horizontal pipe 23. Two ends of the horizontal pipe 23 are connected to respective ends of the two first hoses 25 through the two one-way valves 24. Another end of one of the two first hoses 25 is connected to a water outlet of the sewage pump 26, and another end of another one of the two first hoses 25 is connected to an air outlet of the first air pump 226. The sewage pump 26 and the first air pump 226 are both mounted on the top of the top cover 13.

When the water distribution and aeration integrated mechanism 2 is required to be used as a water distribution equipment, the first air pump 226 does not work, and the sewage pump 26 works to send the external sewage into the horizontal pipe 23 and then into the first vertical pipe 22 through a corresponding one of the two first hoses 25 and a corresponding one of the two one-way valves 24. Due to one of the two one-way valves 24 close to the first air pump 226, the sewage does not enter the first air pump 226, and the sewage in the first vertical pipe 22 enters the water distributor body through the nozzle 28. When the water distribution and aeration integrated mechanism 2 is required to be used as an aeration equipment, the water distribution and aeration switching control mechanism 4 drives the first vertical pipe 22 and the water distributor body to move down, an inner bottom of the water distributor body is communicated with an inner top of the reflector, the first air pump 226 is used as an air delivery device, the first air pump 226 works, the sewage pump 26 does not work, and the first air pump 226 sends the air flow into the horizontal pipe 23 through a corresponding one of the two first hoses 25 and a corresponding one of the two one-way valves 24, and then into the first vertical pipe 22. The airflow enters the water distributor body and the reflector, overflows from the bottom of the reflector and enters the sewage in the bottom of the tank body 11, thus realizing the aeration process.

The water distribution and aeration integrated mechanism 2 further includes a plurality of air flow guide bars 227. The plurality of air flow guide bars 227 are arranged in an annular array at an inner bottom of the conical reflector cover 214 and a bottom of the annular guide plate 216. When the water distribution and aeration integrated mechanism 2 is used as an aeration equipment, the air entering the conical reflector cover 214 can smoothly and equably overflow from the bottom of the annular guide plate 216 after being guided by the air flow guide bars 227.

The water distribution and aeration switching control mechanism 4 is installed at the top of the top cover 13 and connected to the top of the first vertical pipe22.

The water distribution and aeration switching control mechanism 4 includes a lifting rod 41, a sliding column 42, a top plate 43, a control motor 44, a double-screw bolt 45 and a connecting sleeve 46. The top of the top cover 13 is fixedly connected to the top plate 43 through the vertical sliding column 42, and the vertical double-screw bolt 45 is rotatably connected between the top plate 43 and the top cover 13. A top of the double-screw bolt 45 is fixedly connected to the control motor 44, which is fixed on the top of the top plate 43. One end of the lifting rod 41 is fixedly connected to a top of the first vertical pipe 22 through the connecting sleeve 46, the sliding column 42 is vertically and slidably connected in a sliding hole on the lifting rod 41, and the double-screw bolt 45 is threadedly connected in a threaded hole on the lifting rod 41.

The control motor 44 works to drive the double-screw bolt 45 to rotate clockwise. The screw thread interaction between the double-screw bolt 45 and the lifting rod 41 drives the first vertical pipe 22 to move downwards relative to the first slip ring 21 through the connecting sleeve 46, so that the water distributor body is communicated with the reflector through an airflow communication mechanism 3, the sewage pump 26 stops working and the first air pump 226 works, thereby switching to the aeration mechanism. The control motor 44 works to drive the double-screw bolt 45 to rotate counterclockwise. The screw thread interaction between the double-screw bolt 45 and the lifting rod 41 drives the first vertical pipe 22 to move upwards relative to the first slip ring 21 through the connecting sleeve 46, so that the bottom of the water distributor body is separated from the top of the reflector, the sewage pump 26 works and the first air pump 226 stops working, thereby switching to the water distribution mechanism.

The airflow communication mechanism 3 is further included, which includes a mounting rod 31, a thimble 32, a mounting frame 33, a telescopic rod 34, a spring 35, a sealing ball 36 and an air guide tube 37. An inner middle part of the mixing section 212 of the water distributor body is fixedly connected to the vertical thimble 32 through the mounting rod 31, and the air guide tube 37 is arranged at the bottom of the conical reflector cover 214. A top end of the conical reflector cover 214 is communicated with a bottom of the air guide tube 37. An air hole is arranged at a top of the air guide tube 37. An inner top of the conical reflector cover 214 is fixedly connected to a bottom of the telescopic rod 34 through the mounting frame 33. A sealing ball 36 corresponding to the air hole is arranged at a top of the telescopic rod 34. The telescopic rod 34 is sleeved with a spring 35, which pushes the sealing ball 36 to block the air hole.

When the water distribution and aeration switching control mechanism 4 drives the water distributor body to move down through the first vertical pipe 22, the mounting rod 31 drives the thimble 32 to move down, and a bottom end of the thimble 32 passes through the air hole and abuts against a top center of the sealing ball 36. As the water distributor body continues to move down, the thimble 32 pushes the sealing ball 36 to move down, the spring 35 is compressed, and the telescopic rod 34 is shortened, so that the sealing ball 36 leaves the air hole. When the diffusion section 213 of the water distributor body completely abuts against the top of the conical reflector cover 214, the bottom of the water distributor body is communicated with the inner top of the conical reflector cover 214 through the air hole at the top of the air guide tube 37. As the water distributor body moves down, the sewage reflux holes 211 on the side of the water inlet section 210 of the water distributor body are blocked by the limit water retaining sleeve 220, the first air pump 226 serves as an air supply device to supply air into the first hose 25. The air enters the first vertical pipe 22 through the horizontal pipe 23, then enters an inner bottom of the conical reflector cover 214 through the water distributor body, and overflows from the bottom of the annular guide plate 216. The air mixes with the sewage in the bottom of the tank body 11 to realize the basic aeration, so that the water distributor body and the reflector become the aeration mechanism, and the multifunctional utilization of the water distributor body and the reflector is realized.

The airflow communication mechanism 3 further includes a first sealing ring 38 which is arranged at the bottom of the diffusion section 213 of the water distributor body.

The first sealing ring 38 adopts a rubber ring. When the bottom of the diffusion section 213 of the water distributor body abuts against the top of the conical reflector cover 214, there is a gap between the diffusion section 213 of the water distributor body and the conical reflector cover 214 that leaks air. The first sealing ring 38 can seal the gap, so that all the air can enter an inner side of the conical reflector cover 214 and be discharged from the bottom of the annular guide plate 216, and the air can enter the bottom of the tank body 11 and then contact and mix with the sewage upwards, thus improving the aeration effect.

When the system is in use, sewage enters from the top of the first vertical pipe 22, then enters the nozzle 28 through the pipe joint 27. A bottom of the nozzle 28 is a conical opening, and the nozzle 28 sprays the sewage into the water inlet section 210 of the water distributor body, then the sewage sequentially passes through the mixing section 212 and the diffusion section 213 of the water distributor body, and then flows to the reflector through the diffusion section 213 of the water distributor body. Then the reflector reflects the sewage flow upward so that the sewage flow mixes with the sludge filter layer generated by aerobic granular sludge in the tank body 11 and the water in the tank body 11. The mixed sewage re-enters the water inlet section 210, the mixing section 212 and the diffusion section 213 of the water distributor body through the sewage reflux holes 211, so as to realize the water distribution and fully mix the newly entered sewage with the sludge filter layer and water in the tank body 11. Then the mixed sewage is allowed to stand for the anoxic process. After the completion of the anoxic process, the water distribution and aeration switching control mechanism 4 drives the first vertical pipe 22 to move downwards relative to the first slip ring 21 and the top cover 13, and drives the water distributor body to move downwards relative to the limit water retaining sleeve 220 through the threaded cover 29 and the nozzle 28. The limit water retaining sleeve 220 blocks the sewage reflux holes 211, and the bottom of the water distributor body abuts against the reflector, so that the water distributor body and the reflector can be used as a primary aeration device to carry out aerobic aeration treatment in cooperation with an air supply device, and then sedimentation is waited. The aerobic granular sludge in the tank body 11 sedimentates on the agglomerated granular sludge supporting assembly to form a sludge filter layer with a proper thickness, then the sewage containing flocculent granular sludge on an upper layer of the sludge filter layer is discharged into a filter press for filter pressing treatment, and then the water distribution and aeration switching control mechanism 4 drives the first vertical pipe 22 to move upwards relative to the first slip ring 21 and the top cover 13, so that the water distributor body is reset. Sewage is distributed into the tank body 11 again through the water distributor body. The sewage flows to the reflector through the water distributor body to form the expansion hydraulic bulge, which lifts the sludge filter layer on the agglomerated granular sludge supporting assembly, then clear water above the sludge filter layer overflows from the clear water overflow port, thus completing the basic work flow of the sewage treatment system.

Please refer to FIGS. 1 to 10. Embodiment two of the present disclosure discloses a sewage treatment system based on aerobic granular sludge. The structure of this embodiment is basically the same as that of the Embodiment one, but the differences are described as follows.

A sludge discharging mechanism 8 is further included, which includes a sludge discharging pipeline 81, a sludge discharging valve 82 and a uniformly distributed collecting pipeline. The sludge discharging pipeline 81 is inserted and connected in a middle of a side surface of the tank body 11. The sludge discharging valve 82 is mounted at an end of the sludge discharging pipeline 81 outside the tank body 11. The sludge discharging pipeline 81 is connected to the uniformly distributed collecting pipeline at an end inside the tank body 11.

The uniformly distributed collecting pipeline includes an arc-shaped collecting pipe 83, a plurality of sludge discharging horizontal pipes 84 and a pipeline bracket 85. The end of the sludge discharging pipeline 81 inside the tank body 11 is fixedly connected to a middle part of the arc-shaped collecting pipe 83. A side surface of the arc-shaped collecting pipe 83 is connected to an end of each of the plurality of sludge discharging horizontal pipes 84. There may be four sludge discharging horizontal pipes 84 with equal distance. Both sides of each of the sludge discharging horizontal pipes 84 respectively includes a plurality of sludge discharging holes, the specific number of which may be set according to actual requirements. The pipeline bracket 85 is fixedly connected to bottoms of the sludge discharging horizontal pipes 84, and an end of the pipeline bracket 85 is fixedly connected to a middle inner wall of the tank body 11.

The sludge discharging holes on both sides of each of the sludge discharging horizontal pipes 84 are staggered, which is beneficial to uniformly discharge water containing sludge.

When sludge is discharged, the sludge discharging valve 82 on the sludge discharging pipeline 81 is opened, so that the sewage mixed with flocculent granular sludge above the sludge filter layer enters the sludge discharging horizontal pipes 84 from the sludge discharging holes, then is collected in the arc-shaped collecting pipe 83, and finally is discharged through the sludge discharging pipeline 81. The discharged sewage mixed with flocculent granular sludge is sent to the filter press for mud-water separation.

Please refer to FIGS. 1 to 10. Embodiment three of the present disclosure discloses a sewage treatment system based on aerobic granular sludge. The structure of this embodiment is basically the same as that of the Embodiment two, but the differences are described as follows.

A secondary aeration mechanism 6 is included, which includes a plurality of aeration heads 65. An annular air pipe 61 is respectively arranged at a lower side of the tank body 11 corresponding to each conical reflector cover 214. A side of each annular air pipe 61 is connected to an air supply assembly. A plurality of risers 62 are arranged in an annular array at a top of each annular air pipe 61. A top of each riser 62 penetrates through a bottom of the tank body 11 and is connected to a middle part of a lower side of a rotary pipe 64 through a rotary joint 63. The rotary pipe 64 is located below corresponding agglomerated granular sludge supporting rods 218. Both ends of the rotary pipe 64 are closed. An aeration head 65 is arranged at a front side of an end of the rotary pipe 64, and another aeration head 65 is also arranged at a rear side of another end of the rotary pipe 64.

The air supply assembly includes an air supply pipe 66 and a second air pump 67. A side surface of each annular air pipe 61 is connected to an air outlet of the second air pump 67 through the air supply pipe 66. The second air pump 67 is fixed at an outside bottom of the tank body 11. The second air pump 67 works to supply air to each annular air pipe 61 through the air supply pipe 66, then the air is sent to each riser 62 through each annular air pipe 61.

When in use, the air supply assembly supplies air into each annular air pipe 61, and the air in each annular air pipe 61 enters each riser 62. Then the air in the riser 62 is sent into the rotary pipe 64 through the rotary joint 63, and sent to the bottom of the tank body 11 through the aeration heads 65, so that aeration is realized, and aeration efficiency can be improved by the aeration equipment. Since the aeration heads 65 at both ends of the rotary pipe 64 are in opposite directions, and a bottom of the rotary pipe 64 is connected to the rotary joint 63, the rotary joint 63, as a mechanism that can still convey the medium when rotating, can make the rotary pipe 64 rotate, so that the air discharged from the aeration heads 65 can fully contact the sewage at the bottom of the tank body 11, further improving the aeration effect and rapidly increasing the oxygen content of the sewage.

Please refer to FIGS. 1 to 10. Embodiment four discloses a sewage treatment system based on aerobic granular sludge. The structure of this embodiment is basically the same as that of the Embodiment three, but the differences are described as follows.

A stirring mechanism 7 is further included, which includes a stirring power assembly, a stirring shaft 74, an adjusting sleeve 75, an adjusting screw 76, a plurality of connecting rods 77, a plurality of stirring paddles 78 and a plurality of stirring blades 79. A middle part of the top cover 13 is rotatably connected to a top of the stirring shaft 74 through a stirring bearing 71. A top end of the stirring shaft 74 is connected to the stirring power assembly, and a middle part of the stirring shaft 74 is movably sleeved with the adjusting sleeve 75. A screw hole on a side of the adjusting sleeve 75 is internally threaded with an adjusting screw 76, and the adjusting screw 76 abuts against a side of the stirring shaft 74. The plurality of connecting rods 77 are arranged in an annular array on a peripheral side of the adjusting sleeve 75, and each connecting rod 77 is fixedly connected to a respective stirring paddle 78. A bottom of the stirring shaft 74 extends to the inner bottom of the tank body 11. The plurality of stirring blades 79 are arranged in an annular array on a peripheral side of the bottom of the stirring shaft 74.

The stirring power assembly includes a stirring motor 72 and an arched motor frame 73. The top end of the stirring shaft 74 is fixedly connected to an output shaft of the stirring motor 72. The stirring motor 72 is fixed on an upper side of the top cover 13 through the arched motor frame 73. The arched motor frame 73 is fixed on the top cover 13 by screws. The arched motor frame 73 fixes the stirring motor 72. The stirring motor 72 works to drive the stirring shaft 74 to rotate. The stirring shaft 74 drives the stirring blades 79 to stir the sewage in the bottom of the tank body 11. By loosening the adjusting screw 76, a height of the adjusting sleeve 75 on the stirring shaft 74 can be adjusted, so that the heights of the connecting rod 77 and the stirring paddles 78 can be changed, and the stirring paddles 78 can stir a proper water layer of the sewage.

In other embodiments, please refer to FIG. 1, which further includes a downcomer 5 and a downcomer valve 9. The downcomer 5 is inserted into and fixedly connected to the side surface of the tank body 11 at a position below the overflow trough 14. The downcomer valve 9 is installed on the downcomer 5. During the aeration operation, a surface of the sewage in the tank body 11 may fluctuate, and the water containing sludge in the upper layer may enter the overflow trough 14, and is discharged from the overflow notch 15, thereby mixing with the clean water after treatment. In order to avoid this situation, the downcomer valve 9 may be opened, and the sewage in the tank body 11 can be discharged into the sewage tank through the downcomer 5, waiting to be sent into the tank body 11 for next round of sewage treatment.

Referring to FIGS. 1 to 10, a sewage treatment method of a sewage treatment system based on aerobic granular sludge includes the following steps.

At step 1, the first air pump 226 does not work, and the sewage pump 26 works to send the external sewage into the horizontal pipe 23 through the corresponding one of the two first hoses 25 and the corresponding one of the two one-way valves 24, and then into the first vertical pipe 22, and then into the nozzle 28 through the pipe joint 27. The nozzle 28 sprays the sewage into the water inlet section 210 of the water distributor body, then the sewage passes through the mixing section 212 and the diffusion section 213 of the water distributor body in turn. After being diffused by the diffusion section 213 of the water distributor body, the sewage flows to the reflector, then the reflector reflects the sewage flow upward to mix with the sludge filter layer generated by aerobic granular sludge in the tank body 11 and the water in the tank body 11, and the mixed sewage enters the water inlet section 210 of the water distributor body again through the sewage reflux holes 211 due to the impact force of the nozzle 28, and is mixed again.

At step 2, the stirring mechanism 7 works, the stirring motor 72 works to drive the stirring shaft 74 to rotate, the stirring shaft 74 drives the stirring blades 79 to stir the sewage in the bottom of the tank body 11. Meanwhile drives the stirring paddles 78 to stir the sewage in the middle of the tank body 11, then the first air pump 226, the sewage pump 26 and the stirring motor 72 all stop working and stand for the anoxic process.

At step 3, after the anoxic process is completed, the water distribution and aeration switching control mechanism 4 drives the first vertical pipe 22 to move downwards relative to the first slip ring 21 and the top cover 13, and drives the water distributor body to move downwards relative to the limit water retaining sleeve 220 through the threaded cover 29 and the nozzle 28. The limit water retaining sleeve 220 blocks the sewage reflux holes 211. The mounting rod 31 drives the thimble 32 to move down, so that the bottom end of the thimble 32 passes through the air hole and abuts against the top center of the sealing ball 36. As the water distributor body continues to move down, the thimble 32 pushes the sealing ball 36 down, the spring 35 is compressed, and the telescopic rod 34 is shortened, so that the sealing ball 36 leaves the air hole. When the diffusion section 213 of the water distributor body completely abuts against the top of the conical reflector cover 214, the bottom of the water distributor body is communicated with the inner top of the conical reflector cover 214 through the air hole at the top of the air guide tube 37.

At step 4, the first air pump 226 works, and the first air pump 226 is used as an air delivery device to deliver air into the corresponding one of the two first hose 25, the air enters the first vertical pipe 22 through the horizontal pipe 23, then enters the inner bottom of the conical reflector cover 214 through the water distributor body, overflows from the bottom of the annular guide plate 216, and mixes the sewage at the bottom of the tank body 11 to realize basic aeration. The second air pump 67 in the air supply assembly sends air into each riser 62 through the annular air pipe 61, then the air in the riser 62 is sent into the rotary pipe 64 through the rotary joint 63, and sent into the bottom of the tank body 11 through the aeration heads 65 to realize secondary aeration.

At step 5, after the aeration is completed, the stirring mechanism 7 works for a period of time and then stands still to complete the second anoxic process, then the step 4 is repeated.

At step 6, the first air pump 226 and the second air pump 67 are turned off and wait for sedimentation, the aerobic granular sludge in the tank body 11 sedimentates on the agglomerated granular sludge supporting assembly to form a sludge filter layer with a proper thickness. The sludge discharging valve 82 on the sludge discharging pipeline 81 is opened, the sewage mixed with flocculent granular sludge above the sludge filter layer enters the sludge discharging horizontal pipe 84 from the sludge discharging holes, then is collected in the arc-shaped collecting pipe 83, and finally is discharged through the sludge discharging pipeline 81. The discharged sludge mixed with flocculent granular sludge is sent into the filter press for mud-water separation. When the sewage mixed with flocculent granular sludge above the sludge filter layer is discharged, only treated clean water remains above the sludge filter layer.

At step 7, the control motor 44 works to drive the double-screw bolt 45 to rotate counterclockwise, the screw thread interaction between the double-screw bolt 45 and the lifting rod 41 drives the first vertical pipe 22 to move upwards relative to the first slip ring 21 through the connecting sleeve 46, so that the bottom of the water distributor body is separated from the top of the reflector, and the spring 35 rebounds to push the sealing ball 36 to plug the air hole of the air guide tube 37 again.

At step 8, the sewage pump 26 works to send the external sewage into the horizontal pipe 23 again through the corresponding one of the two first hoses 25 and the corresponding one of the two one-way valves 24, then into the first vertical pipe 22, and then into the nozzle 28 through the pipe joint 27. The nozzle 28 sprays the sewage into the water inlet section 210 of the water distributor body, the sewage sequentially passes through the mixing section 212 and the diffusion section 213 of the water distributor body. After being diffused by the diffusion section 213 of the water distributor body, the sewage flows to the reflector, the spiral guide vanes 215 on the conical reflector cover 214 guide the water flow in a spiral shape, the water flow flows to the annular guide plate 216. Since the middle part of the annular guide plate 216 is concave downward, and the outer side of the annular guide plate 216 is bent upward, the flow guiding action of the annular guide plate 216 makes the spiral water flow turn back and flow upward, forming an expansion hydraulic bulge, which can stably lift the sludge filter layer on the agglomerated granular sludge supporting assembly, so that the sludge filter layer is slowly suspended, the sewage entering is always below the sludge filter layer, and the clear water above the sludge filter layer is discharged from the clear water overflow port.

Slow-growing microorganisms can gradually be selectively enriched when the sewage is alternately switched between eutrophic and non-eutrophic conditions. Under suitable selected pressure, slow-settling microbial aggregates are gradually eliminated, while fast-settling microbial aggregates are gradually transformed from flocculent activated sludge to aerobic granular sludge under suitable hydraulic shearing environment. Aerobic granular sludge is used to promote simultaneous nitrification and denitrification.

It is worth noting that the sewage pump 26, the first air pump 226, the control motor 44, the second air pump 67, and the stirring motor 72 disclosed in the above embodiments are all controlled by an external PLC controller, the control methods of which adopt the methods commonly used in the existing technology, in which the control motor 44 adopts a servo motor capable of rotating forward and backward.

It should be noted that in the present disclosure, relational terms such as first and second are only used to distinguish one entity or operation from another entity or operation, and do not necessarily require or imply that there is any such actual relationship or order between these entities or operations. Moreover, the terms "include", "have" or any other variation thereof are intended to cover non-exclusive inclusion, so that a process, method, article or equipment including a series of elements includes not only those elements, but also other elements not explicitly listed or elements inherent to such process, method, article or equipment.

Although embodiments of the present disclosure have been shown and described, it will be understood by those skilled in the art that various changes, modifications, substitutions and variations can be made to these embodiments without departing from the principles and gist of the present disclosure, the scope of which is defined by the appended claims and their equivalents.

## Claims

1. A sewage treatment system based on aerobic granular sludge, comprising:
a sewage treatment tank (1), comprising a tank body (11), wherein a top cover (13) is fixedly connected to a top opening of the tank body (11);
a water distribution and aeration integrated mechanism (2), comprising a reflector, wherein four limit water retaining sleeves (220) are arranged in an annular array in the tank body (11), each limit water retaining sleeve (220) is fixedly connected to an inner bottom of the tank body (11) through a water retaining sleeve mounting assembly; a mixing section (212) of a water distributor body is vertically and slidably connected in each limit water retaining sleeve (220), a top of the mixing section (212) of the water distributor body is connected to a water inlet section (210) of the water distributor body; three sewage reflux holes (211) are arranged in an annular array on a side surface of the water inlet section (210) of the water distributor body, a bottom of the mixing section (212) of the water distributor body is connected to a diffusion section (213) of the water distributor body, a top of the water inlet section (210) of the water distributor body is threadedly connected with a threaded cover (29), a middle part of the threaded cover (29) is fixedly connected to a nozzle (28), a top of the nozzle (28) is fixedly connected to a bottom end of a first vertical pipe (22) through a pipe joint (27), a first slip ring (21) is fixedly connected to a top of the top cover (13) at a position corresponding to the first vertical pipe (22), the first slip ring (21) is vertically and slidably connected to the first vertical pipe (22), the reflector is arranged below the diffusion section (213) of the distributor body, and a peripheral side of a bottom of the reflector is connected to a plurality of support frames (228) in the water retaining sleeve mounting assembly through an agglomerated granular sludge supporting assembly; and
a water distribution and aeration switching control mechanism (4), installed at the top of the top cover (13).

2. The sewage treatment system based on aerobic granular sludge according to claim 1, wherein the water distribution and aeration integrated mechanism (2) further comprises a sewage pump (26) and a first air pump (226), a top end of the first vertical pipe (22) is connected to a middle of a horizontal pipe (23), two ends of the horizontal pipe (23) are respectively connected to an end of each of two first hoses (25) through two one-way valves (24), another end of one of the two first hoses (25) is connected to a water outlet of the sewage pump (26), and another end of another one of the two first hoses (25) is connected to an air outlet of the air pump (226).

3. The sewage treatment system based on aerobic granular sludge according to claim 1, wherein the reflector comprises a conical reflector cover (214), which is arranged below the diffusion section (213) of the water distributor body, a bottom edge of the conical reflector cover (214) is integrally connected to an annular guide plate (216), an outer edge of the annular guide plate (216) is bent upwards, and a plurality of spiral guide vanes (215) are arranged in an annular array at a peripheral side of the conical reflector cover (214).

4. The sewage treatment system based on aerobic granular sludge according to claim 3, wherein the agglomerated granular sludge supporting assembly comprises a plurality of agglomerated granular sludge supporting rods (218), a plurality of pull rods (217) are arranged in an annular array at a top of the outer edge of the annular guide plate 216, the plurality of supporting frames 228 in the water retaining sleeve mounting assembly are fixedly connected to a mounting sleeve (219), an inner side of the mounting sleeve (219) is fixedly connected to the plurality of agglomerated granular sludge supporting rods (218) arranged in an annular array, the number of the plurality of agglomerated granular sludge supporting rods (218) is the same with the number of the plurality of pull rods (217), and ends of the plurality of agglomerated granular sludge supporting rods (218) away from the mounting sleeve (219) are fixedly connected to corresponding top ends of the plurality of pull rods (217).

5. The sewage treatment system based on aerobic granular sludge according to claim 4, further comprising an airflow communication mechanism (3), wherein the airflow communication mechanism (3) comprises an air guide tube (37), an inner middle part of the mixing section (212) of the water distributor body is fixedly connected to a vertical thimble (32) through a mounting rod (31), a top end of the conical reflector cover (214) is communicated with a bottom of the air guide tube (37), an air hole is arranged at a top of the air guide tube (37), an inner top of the conical reflector cover (214) is fixedly connected to a bottom of a telescopic rod (34) through a mounting frame (33), a sealing ball (36) corresponding to the air hole is arranged at a top of the telescopic rod (34), and the telescopic rod (34) is sleeved with a spring (35), which pushes the sealing ball (36) to block the air hole.

6. The sewage treatment system based on aerobic granular sludge according to claim 5, wherein the water distribution and aeration switching control mechanism (4) comprises a lifting rod (41), the top of the top cover (13) is fixedly connected to a top plate (43) through a vertical sliding column (42), a vertical double-screw bolt (45) is rotatably connected between the top plate (43) and the top cover (13), a top of the double-screw bolt (45) is fixedly connected to a control motor (44), which is fixed on a top of the top plate (43), one end of the lifting rod (41) is fixedly connected to a top of the first vertical pipe (22) through a connecting sleeve (46), the sliding column (42) is vertically and slidably connected in a sliding hole on the lifting rod (41), and the double-screw bolt (45) is threadedly connected in a threaded hole on the lifting rod (41).

7. The sewage treatment system based on aerobic granular sludge according to claim 1, further comprising a sludge discharging mechanism (8), which comprises a sludge discharging pipeline (81), a sludge discharging valve (82) and a uniformly distributed collecting pipeline, wherein the sludge discharging pipeline (81) is inserted and connected in a middle of a side surface of the tank body (11), the sludge discharging valve (82) is mounted at an end of the sludge discharging pipeline (81) outside the tank body 11, and the sludge discharging pipeline (81) is connected to the uniformly distributed collecting pipeline at an end inside the tank body (11).

8. The sewage treatment system based on aerobic granular sludge according to claim 7, wherein the uniformly distributed collecting pipeline comprises an arc-shaped collecting pipe (83), the end of the sludge discharging pipeline (81) inside the tank body (11) is fixedly connected to a middle part of the arc-shaped collecting pipe (83), a side surface of the arc-shaped collecting pipe (83) is connected to an end of each of a plurality of sludge discharging horizontal pipes (84), both sides of each of the sludge discharging horizontal pipes (84) respectively includes a plurality of sludge discharging holes, a pipeline bracket (85) is fixedly connected to bottoms of the sludge discharging horizontal pipes (84), and an end of the pipeline bracket (85) is fixedly connected to a middle inner wall of the tank body (11).

9. The sewage treatment system based on aerobic granular sludge according to claim 4, further comprising a secondary aeration mechanism (6), wherein the secondary aeration mechanism (6) comprises a plurality of aeration heads (65), an annular air pipe (61) is arranged at a lower side of the tank body (11) corresponding to the conical reflector cover (214), a side of the annular air pipe (61) is connected to an air supply assembly, a plurality of risers (62) are arranged in an annular array at a top of the annular air pipe (61), a top of each riser (62) penetrates through a bottom of the tank body (11) and is connected to a middle part of a lower side of a rotary pipe (64) through a rotary joint (63), both ends of the rotary pipe (64) are closed, one of the aeration heads (65) is arranged at a front side of an end of the rotary pipe (64), and another one of the aeration heads (65) is arranged at a rear side of another end of the rotary pipe (64).

10. The sewage treatment system based on aerobic granular sludge according to claim 1, further comprising a stirring mechanism (7), wherein the stirring mechanism (7) comprises a stirring power assembly and a stirring shaft (74), a middle part of the top cover (13) is rotatably connected to a top of the stirring shaft (74) through a stirring bearing (71), a top end of the stirring shaft (74) is connected to the stirring power assembly, a middle part of the stirring shaft (74) is movably sleeved with an adjusting sleeve (75), a screw hole on a side of the adjusting sleeve (75) is internally threaded with an adjusting screw (76), the adjusting screw (76) abuts against a side of the stirring shaft (74), a plurality of connecting rods (77) are arranged in an annular array on a peripheral side of the adjusting sleeve (75), each connecting rod (77) is fixedly connected to a stirring paddle (78), a plurality of stirring blades (79) are arranged in an annular array on a peripheral side of a bottom of the stirring shaft (74).
